Europäisches Patentamt

European Patent Office

Office européen des brevets

(19)

(11) Numéro de publication : **0 070 946**
**B1**

(12) **FASCICULE DE BREVET EUROPÉEN**

(45) Date de publication du fascicule du brevet :
07.11.84

(51) Int. Cl.³ : **F 16 J 15/56, F 16 J 15/32**

(21) Numéro de dépôt : **81420117.4**

(22) Date de dépôt : **30.07.81**

(54) **Garniture d'étanchéité hydraulique à simple effet.**

(43) Date de publication de la demande :
09.02.83 **Bulletin 83/06**

(45) Mention de la délivrance du brevet :
07.11.84 **Bulletin 84/45**

(84) Etats contractants désignés :
**AT BE CH DE GB IT LI LU NL SE**

(56) Documents cités :
FR-A- 1 267 723
GB-A-  710 374
US-A- 3 366 425

(73) Titulaire : **Dechavanne, Jacques**
**9 Chemin du Guâ**
**F-38360 Sassenage (FR)**

(72) Inventeur : **Dechavanne, Jacques**
**9 Chemin du Guâ**
**F-38360 Sassenage (FR)**

(74) Mandataire : **Maureau, Pierre**
**Cabinet GERMAIN & MAUREAU Le Britannia - Tour C**
**20, Boulevard E. Déruelle**
**F-69003 Lyon (FR)**

## Description

La présente invention concerne une garniture d'étanchéité hydraulique à simple effet, assurant notamment l'étanchéité dynamique entre un guide de tige et une tige de piston coulissante dans ledit guide, et séparant deux enceintes dont l'une est sous pression et l'autre en relation avec l'atmosphère.

L'invention permet d'assurer, avec une grande fiabilité, ce genre d'étanchéité, même lorsque la tige de piston est animée d'un mouvement rotatif, combiné ou non à un mouvement alternatif rectiligne.

Les dispositifs d'étanchéité existants de ce type sont réalisés par des anneaux de forme torique ou de section en « U » simples, avec ou sans bourrage de répartition de pression (voir par exemple le document G.B.A.-710374). En général, le guide de tige est muni de plusieurs gorges, servant respectivement de logements pour le racleur, les éléments de guidage et les éléments d'étanchéité. Cette conception complique la réalisation et l'assemblage des vérins hydrauliques par leurs constructeurs, ainsi le remplacement des joints, bagues, garnitures ou similaires.

La présente invention vise à remédier à ces inconvénients, en fournissant une garniture aux fonctions combinées d'étanchéité, de guidage et de raclage, capable d'être montée facilement dans une gorge simple et unique, cette garniture étant compacte et se présentant comme une cartouche interchangeable.

A cet effet, l'invention a essentiellement pour objet une garniture d'étanchéité hydraulique à simple effet selon la revendication 1.

La garniture réalisée suivant ce principe assure le guidage de la tige par son corps central, tandis que ses deux extrémités assurent respectivement les autres fonctions d'étanchéité et de raclage. L'invention procure ainsi, pour les constructeurs de vérins hydrauliques, un assemblage compact assurant toutes les fonctions, ce qui permet de simplifier considérablement la réalisation des vérins, d'autant plus que cet assemblage se monte et s'immobilise de façon rapide par encliquetage dans une gorge ouverte simple. En pratique il ne restera, aux constructeurs de vérins, que la charge de la création de la tige, du cylindre, des fonds et guide. Quant aux pièces maîtresses assurant l'ajustement des parties coulissantes, leur guidage, l'étanchéité et la protection par raclage, elles seront fournies par le fabricant de joints, sous la forme d'une unique garniture interchangeable à fonctions combinées, se montant et se fixant en une seule opération simple.

A l'extrémité conçue pour assurer l'étanchéité, la lèvre d'étanchéité est avantageusement reliée au corps principal de la bague par l'intermédiaire d'une zone charnière mince, tandis que cette lèvre d'étanchéité a une section plus épaisse au droit du contact d'étanchéité linéaire avec la tige de piston.

De préférence, la zone charnière, reliant la lèvre d'étanchéité au corps principal de la bague, est apte à restituer, par suite de la déformation de la lèvre d'étanchéité, un effort compensant la « perte de mémoire » du matériau constitutif de l'anneau de poussée. Cette caractéristique complémentaire constitue une nouveauté par rapport aux joints existants, en particulier les joints composites pour tige où l'anneau de contact, en matériau dur, sensiblement identique à celui qui est choisi pour la bague de la présente invention, n'est plaqué à la surface de contact que par l'effort développé par l'anneau de poussée. La fiabilité dans la qualité d'étanchéité et la constance dans le temps sont donc des résultats supplémentaires importants procurés par la présente invention.

Suivant une forme de réalisation préférée de l'invention, et plus spécialement des moyens de raclage et d'encliquetage, le corps principal de la bague est prolongé, à l'extrémité opposée à la lèvre d'étanchéité, par une aile moins épaisse se terminant par une gorge annulaire séparant une lèvre d'essuyage et de raclage, tournée vers l'intérieur, et un redan d'immobilisation, tourné vers l'extérieur et s'encliquetant sur le guide de tige. La gorge annulaire a une profondeur déterminée de manière à donner, à la lèvre et au redan, la souplesse nécessaire pour que ces parties puissent être montées, et puissent ensuite coopérer respectivement avec la tige de piston et avec le guide de tige, en vue de remplir leurs fonctions respectives de raclage des impuretés et d'encliquetage immobilisant la garniture.

De toute façon, l'invention sera mieux comprise, et d'autres caractéristiques seront mises en évidence, à l'aide de la description qui suit, en référence au dessin schématique annexé représentant, à titre d'exemples non limitatifs, quelques formes d'exécution de cette garniture d'étanchéité hydraulique à simple effet :

Figure 1 est une vue générale en demi-coupe d'une garniture conforme à l'invention, montée dans une gorge ouverte d'un guide de tige de piston ;

Figure 2 représente, à plus grande échelle, le détail de l'extrémité de la garniture de figure 1 qui assure l'étanchéité ;

Figure 3 est une vue de détail similaire à figure 2, mais illustrant le fonctionnement de l'extrémité d'étanchéité au contact de la tige de piston ;

Figure 4 est une vue de détail similaire aux précédentes, montrant une variante de l'anneau de poussée prévu à l'extrémité d'étanchéité ;

Figure 5 représente le détail de l'extrémité de la garniture de figure 1 qui assure le raclage ;

Figure 6 est une vue générale en demi-coupe d'une autre garniture conforme à l'invention, scindée en deux parties.

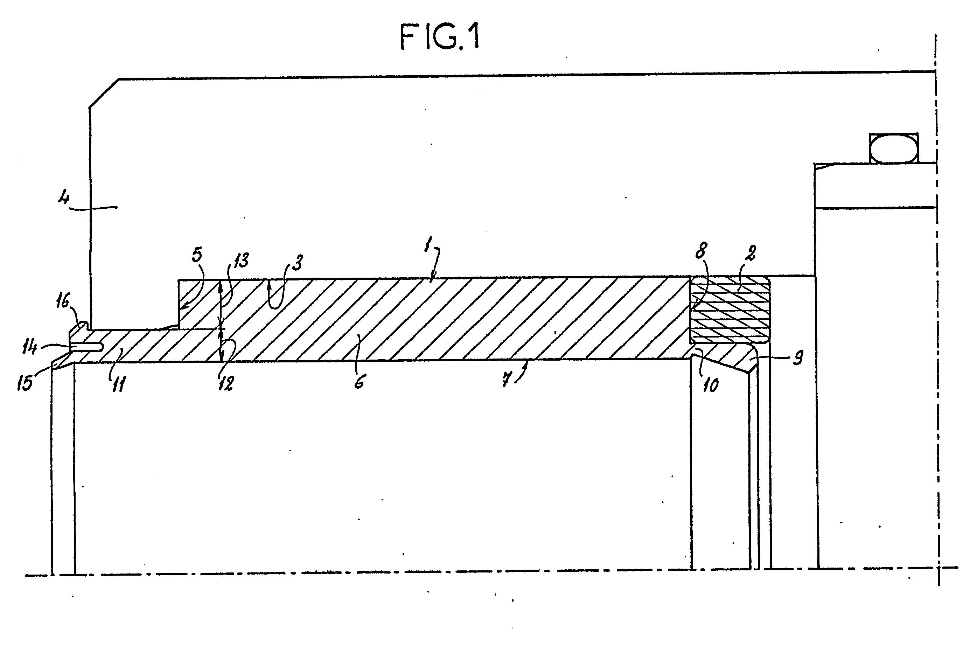

La garniture d'étanchéité objet de l'invention, visible sur la figure 1, se compose d'une bague 1 et d'un anneau 2 de poussée et de répartition de pression. L'ensemble est monté dans une gorge ouverte 3 d'un guide de tige 4, délimitée d'un côté seulement par un épaulement annulaire 5.

La bague 1 comprend un corps principal 6 de section rectangulaire, à fonction de guidage par sa paroi interne cylindrique 7. A l'une de ses extrémités, la bague 1 comporte un logement extérieur 8 recevant l'anneau 2 de poussée et de répartition de pression. A l'aplomb de ce logement 8, la bague 1 forme une lèvre d'étanchéité 9, soumise à l'action de poussée de l'anneau 2. La lèvre 9 est reliée au corps principal 6 par l'intermédiaire d'une zone charnière mince 10, alors que l'extrémité libre de cette lèvre 9 est de section plus épaisse.

A l'autre extrémité de la bague de guidage 1, le corps principal 6 est prolongé par une aile 11 de raclage et d'encliquetage. L'épaisseur 12 de cette aile 11 est variable en fonction de l'utilisation en pression. En fait, l'épaisseur résiduelle 13 doit être calculée de telle façon que l'effort transmis sur la section annulaire totale de la bague 1 puisse trouver appui sur l'épaulement annulaire 5 du guide de tige 4 sans que, pour cela, la réaction par unité de surface ne dépasse les possibilités du matériau rigide utilisé pour l'ensemble de la bague 1. L'extrémité libre de l'aile 11 d'épaisseur 12 réduite est allégée par une gorge annulaire 14 séparant une lèvre d'essuyage et de raclage 15 tournée vers l'intérieur, et un redan d'immobilisation 16, tourné vers l'extérieur, la gorge 14 donnant une souplesse suffisante à la lèvre 15 et au redan 16.

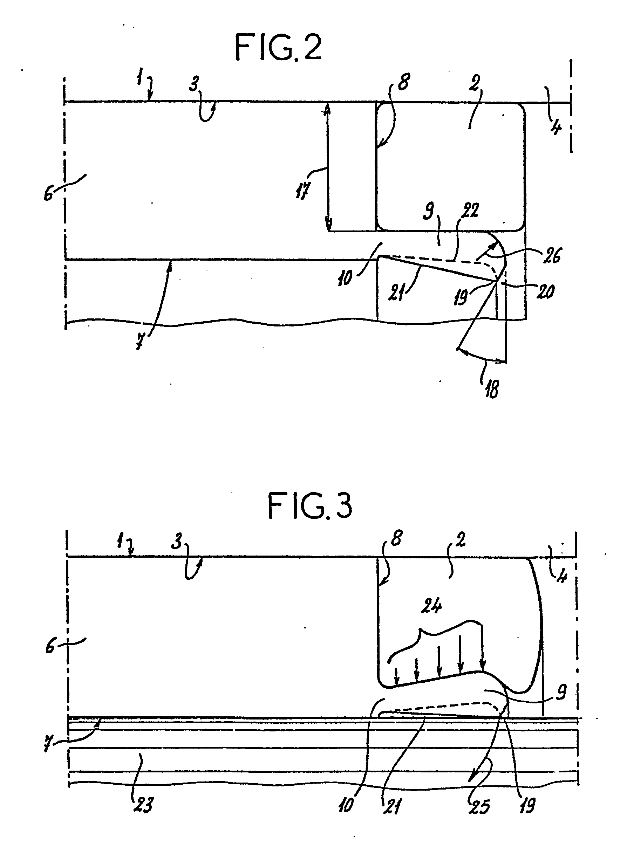

La figure 2 montre le détail de l'extrémité de la bague 1 située du côté de l'anneau de poussée 2, dite « extrémité d'étanchéité ». Comme l'indique cette figure 2, le logement ouvert 8, prévu pour recevoir l'anneau de poussée 2, a une section annulaire 17 identique à la section annulaire de l'anneau 2.

L'extrémité libre de la lèvre d'étanchéité 9, plus épaisse que la zone charnière 10 comme indiqué plus haut, peut comporter soit une coupe négative 18 avec une arête de contact d'étanchéité 19, soit une arête vive positive 20 sur la face avant (en pointillés).

Pour certaines applications, le profil interne rectiligne 21, reliant la zone charnière 10 à l'arête de contact 19, peut être modifié suivant le profil concave 22 (en pointillés), permettant d'obtenir ainsi une arête 19 plus fine qui, même en cas d'usure, maintiendra toujours un contact filiforme réduit. Les deux profils représentés 21 et 22 ne sont pas limitatifs et d'autres internes peuvent être créés à la demande de l'utilisateur ou en fonction des besoins de l'utilisation, ces profils pouvant comporter, si nécessaire, plusieurs arêtes de contact telles que l'arête 19.

Alors que la figure 2 montre l'anneau de poussée 2 et la lèvre d'étanchéité 9 à l'état libre, la figure 3 représente les mêmes parties au contact d'une tige de piston 23, traversant la bague 1 et guidée par la paroi interne 7 du corps principal 6. La lèvre 9 se trouve alors déformée, ce qui, en plus de la compression de l'anneau 2 créant un réseau de forces 24, engendre des tensions importantes dans la zone charnière 10. Ces tensions vont restituer un effort supplémentaire 25, tendant à maintenir constamment l'arête de contact 19 plaquée contre la tige 23.

Cet effort important 25, dû aux tensions dans la zone charnière 10, va compenser la « perte de mémoire » de l'anneau de poussée 2. En effet, l'anneau 2, étant réalisé en matériau souple, a une déformation rémanente inéluctable plus ou moins importante suivant le type de matériau choisi, mais qui va être compensée par la réaction des tensions de la zone charnière 10.

Lorsque l'extrémité d'étanchéité de la bague 1 est introduite dans la gorge 3 et, qu'en plus, la tige 23 dont elle a charge d'assurer l'étanchéité est mise en place, l'arête 19 va donc se conformer à cette tige 23 et prendre la position montrée sur la figure 3.

Lors de cette mise en place, la lèvre 9, pivotant autour de sa zone charnière 10, pourrait endommager la surface intérieure de l'anneau de poussée 2. Pour cette raison, le contact est aménagé par un profil externe partiellement incurvé suivant un rayon 26 prévenant un tel dommage, mais tout autre forme ou profil peut être adopté.

Dans la position représentée sur la figure 3, de multiples forces 24 apparaissent. Elles sont très importantes à l'aplomb de l'arête de contact 19 et diminuent progressivement en fonction de l'éloignement de cette arête pour aboutir à une valeur pratiquement nulle au droit de la zone charnière 10.

Suivant le type de profil 21 ou 22 adopté (voir figure 2), le contact dynamique suivant l'arête 19 sera plus ou moins aigu mais, en tout état de cause, même s'il y a plusieurs arêtes 19 le long du profil, il restera filiforme même s'il est multiple.

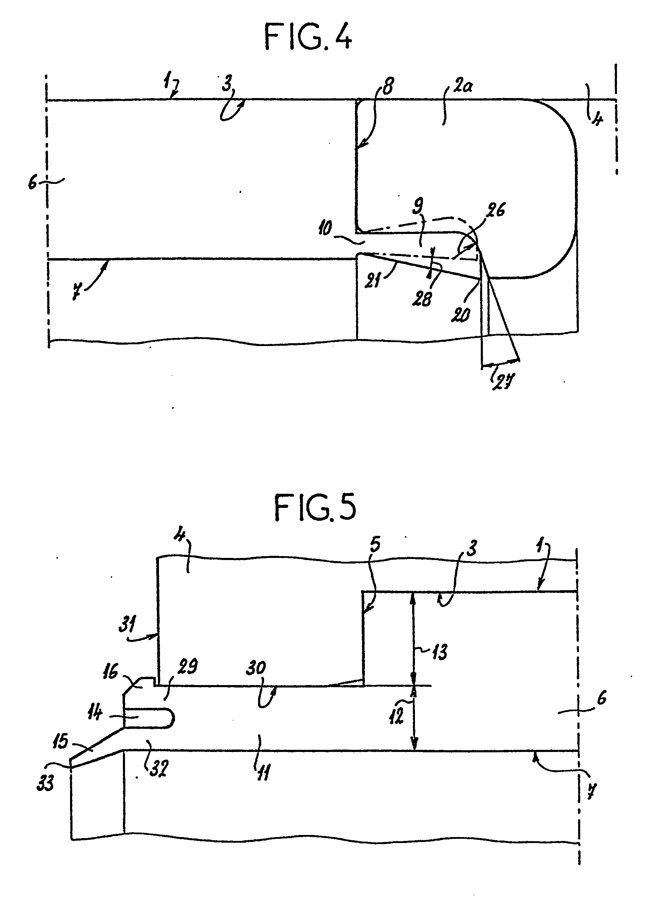

Dans le cas de certaines applications à basse pression ou moyenne pression, et lorsque l'on désire un essuyage du film d'huile d'étanchéité, l'anneau de poussée 2a peut, suivant une variante illustrée par la figure 4, prendre une forme qui suit partiellement le rayon 26 du profil externe de la lèvre 9, cette dernière ayant toujours un profil positif.

Néanmoins, l'anneau de poussée 2a, dans sa partie prolongée (par rapport à l'anneau 2 des figures précédentes), doit avoir un angle 27 lui donnant une dépouille capable de loger l'extrémité de la lèvre 9 lorsque celle-ci vient au contact de la tige 23, l'angle 27 devant être égal à l'angle 28 déterminé par le pivotement de la lèvre 9 lors de sa mise en fonction.

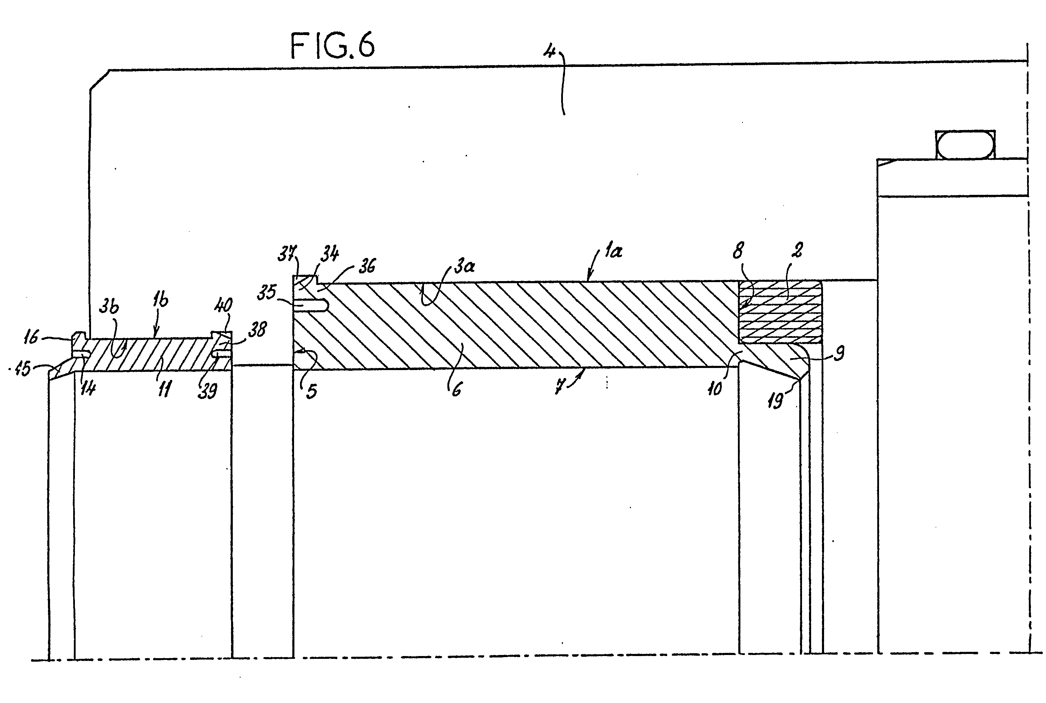

A l'autre extrémité de la bague 1 (voir figure 5) se trouve l'aile 11 déjà mentionnée, qui prolonge le guidage de la tige 23 et qui, par sa lèvre 15 et son redan 16, assure les fonctions de raclage et d'immobilisation.

Le redan extérieur 16, limité par la gorge 14 et relié au restant de l'aile 12 par une zone 29 d'épaisseur réduite formant charnière, peut être introduit aisément à travers le passage 30 du guide de tige 4, et vient s'accrocher sur la face annulaire terminale 31 dudit guide de tige 4. Ce redan 16 interdit tout mouvement en arrière non désiré de la bague 1, donc immobilise l'ensemble de la garniture dans la gorge 3, laquelle peut rester très simple comme le montre la figure 1.

La lèvre intérieure de raclage 15, plus allongée que le redan 16, est aussi reliée au restant de l'aile 12 par une zone 32 formant charnière qui lui donne sa souplesse. L'arête extrême 33 de cette lèvre 15 a pour rôle de racler les impuretés pouvant se fixer sur la tige de piston 23, lorsque celle-ci est sortie. Vu la nature du matériau dur choisi, du fait de la fonction de guide remplie par le corps principal 6, la lèvre 16 constitue réellement un racleur et non pas un simple essuyeur.

L'ensemble décrit jusqu'à présent peut éventuellement être scindé en deux parties, comme représenté sur la figure 6 car, dans certaines applications à très haute pression, la surface de réaction doit être la plus grande possible, et la surface annulaire correspondant sur les figures précédentes à l'épaulement 5 est alors insuffisante.

La bague objet de l'invention est donc, dans ce cas, divisée en deux parties 1a et 1b.

La partie 1a possède, du côté « pression », une extrémité d'étanchéité conformée comme décrit précédemment, c'est-à-dire avec un anneau de contact 2 et une lèvre d'étanchéité 9. Son corps 6 de section générale rectangulaire, à fonction de guidage, comporte à son extrémité opposée à la lèvre 9 un léger redan 34, délimité par une gorge annulaire 35 lui donnant sa souplesse dans la zone charnière 36. La partie 1a est montée dans une gorge ouverte 3a du guide de tige 4, et immobilisée dans cette gorge 3a par le redan 34, lequel pénètre dans une petite rainure annulaire 37, exécutée avec précision de manière à permettre l'encliquetage.

La partie 1b est logée dans une autre gorge plus petite 3b séparée de la gorge 3a par l'épaulement 5 du guide de tige 4. Son extrémité extérieure comporte, comme dans le cas de l'aile 11 bien visible sur la figure 5, une lèvre de raclage 15 et un redan 16 séparés par une gorge annulaire 14. A l'opposé de ces éléments qui ne sont pas modifiés, la partie 1b possède un autre redan d'encliquetage 38 délimité par une gorge annulaire 39 lui donnant la souplesse nécessaire. Le redan supplémentaire 38 est introduit dans une petite rainure annulaire 40, ce qui immobilise axialement la partie 1b dans sa gorge 3b.

L'ensemble se décompose donc en une partie 1a « étanchéité + guidage » et une partie 1b « guidage + raclage », qui restent montables dans des gorges ouvertes simples, respectivement 3a et 3b, conformément au but principal de la présente invention, et qui sont immobilisées dans ces gorges 3a et 3b grâce aux moyens d'encliquetage supplémentaires que constituent les redans 34 et 38 et les rainures correspondantes 37 et 40.

En conclusion, le résultat de l'invention est de mettre à la disposition des constructeurs de vérins hydrauliques un assemblage compact assurant toutes les fonctions jusqu'à des pressions moyennes ou élevées et, dans le cas d'application à des pressions très élevées, de mettre néanmoins à la disposition de ces constructeurs un ensemble de deux éléments parfaitement montables par déformation en respectant le principe de la cartouche interchangeable.

## Revendications

1. Garniture d'étanchéité hydraulique à simple effet, assurant notamment l'étanchéité dynamique entre un guide de tige (4) et une tige de piston (23) coulissante et/ou rotative dans ledit guide, et séparant deux enceintes dont l'une est sous pression et l'autre en relation avec l'atmosphère, se présentant comme l'assemblage compact d'une bague (1) et d'un anneau de poussée (2), se montant dans une gorge ouverte (3) du guide de tige (4) limitée par un seul épaulement (5), une extrémité de la bague (1), formant une lèvre d'étanchéité (9) située à l'aplomb de l'anneau de poussée (2) et soumise à l'action de ce dernier, caractérisée en ce que l'extrémité de la bague (1), dont le corps principal a une fonction de guidage, opposée à la pression est munie de moyens (11 à 16) assurant à la fois le raclage de la tige de piston (23) et un encliquetage immobilisant la garniture dans sa gorge (3).

2. Garniture d'étanchéité selon la revendication 1, caractérisée en ce que la lèvre d'étanchéité (9) est reliée au corps principal (6) de la bague (1) par l'intermédiaire d'une zone charnière mince (10).

3. Garniture d'étanchéité selon la revendication 2, caractérisée en ce que la lèvre d'étanchéité (9) a une section plus épaisse au droit du contact d'étanchéité linéaire (19, 20) avec la tige de piston (23).

4. Garniture d'étanchéité selon la revendication 2 ou 3, caractérisée en ce que la zone charnière (10), reliant la lèvre d'étanchéité (9) au corps principal (6) de la bague (1), est apte à restituer, par suite de la déformation de la lèvre d'étanchéité (9), un effort (25) compensant la « perte de mémoire » du matériau constitutif de l'anneau de poussée (2).

5. Garniture d'étanchéité selon l'une quelconque des revendications 2 à 4, caractérisée en ce que le profil interne (22) de la lèvre d'étanchéité (9), entre la zone charnière (10) et l'arête de contact d'étanchéité (19), est concave.

6. Garniture d'étanchéité selon l'une quelconque des revendications 2 à 5, caractérisé en ce que le profil externe de la lèvre d'étanchéité (9), en contact avec l'anneau de poussée (2), est partiellement incurvé suivant un certain rayon (26).

7. Garniture d'étanchéité selon la revendication 6, caractérisée en ce que l'anneau de poussée (2a) est prolongé avec une forme qui suit partiellement le rayon précité (26) du profil externe de la lèvre d'étanchéité (9), en conservant un angle de dépouille (27) égal à l'angle de pivotement (28) de la lèvre (9) lors de sa mise en fonction.

8. Garniture d'étanchéité selon l'une quelconque des revendications 1 à 7, caractérisée en ce que le corps principal (6) de la bague (1) est prolongé, à l'extrémité opposée à la lèvre d'étanchéité (9), par une aile (11) moins épaisse se terminant par une gorge annulaire (14) séparant une lèvre d'essuyage et de raclage (15), tournée vers l'intérieur, et un redan d'immobilisation (16), tourné vers l'extérieur et s'encliquetant sur le guide de tige (4).

9. Garniture d'étanchéité selon l'une quelconque des revendications 1 à 8, caractérisée en ce qu'elle est scindée en deux parties, sa bague étant divisée en deux parties dont l'une (1a), comprenant la lèvre d'étanchéité (9) associée à l'anneau de poussée (2), a une fonction d'étanchéité et de guidage, et dont l'autre (1b), munie des moyens précités de raclage et d'encliquetage (15, 16), a une fonction de guidage et de raclage, les deux parties considérées (1a, 1b) étant montées dans des gorges ouvertes respectives (3a, 3b), et immobilisées par des moyens d'encliquetage supplémentaires (34, 37 ; 38, 40).

10. Garniture d'étanchéité selon la revendication 9, caractérisée en ce que les moyens d'encliquetage supplémentaires comprennent, pour l'une des parties (1a) de la bague, un redan (34) prévu à son extrémité opposée à la lèvre d'étanchéité (9) et pénétrant dans une rainure annulaire (37) de la gorge correspondante (3a), et pour l'autre partie (1b) de la bague, un redan (38) situé à l'opposé de la lèvre de raclage (15) et introduit dans une rainure annulaire (40) de la gorge correspondante (3b).

**Claims**

1. A single-acting hydraulic sealing fitting, which ensures in particular dynamic sealing between a rod guide (4) and a piston rod (23) which slides and/or rotates in the said guide, and separates two enclosures, one of which is under pressure and the other of which is open to the atmosphere, said fitting being in the form of a compact assembly of a ring (1) and a thrust ring (2), mounted in an open channel (3) of the rod guide (4) limited by a single shoulder (5), one end of the ring (1) forming a sealing lip (9) situated perpendicular to the thrust ring (2) and subjected to the action of the latter, characterised in that the end of the ring (1) — whose main body has a guiding function — opposed to the pressure is provided with means (11 to 16) ensuring both the scraping of the piston rod (23) and a latching which immobilises the fitting in its channel (3).

2. A sealing fitting according to Claim 1, characterised in that the sealing lip (9) is connected to the main body (6) of the ring (1) by means of a thin hinge area (10).

3. A sealing fitting according to Claim 2, characterised in that the sealing lip (9) has a thicker section perpendicular to the linear sealing contact (19, 20) with the piston rod (23).

4. A sealing fitting according to Claim 2 or 3, characterised in that the hinge area (10) connecting the sealing lip (9) to the main body (6) of the ring (1), is capable, owing to the deformation of the sealing lip (9), of restoring a force (25) which compensates the « loss of memory » of the material constituting the thrust ring (2).

5. A sealing fitting according to any one of Claims 2 to 4, characterised in that the inner profile (22) of the sealing lip (9), between the hinge area (10) and the sealing contact edge (19) is concave.

6. A sealing fitting according to any one of Claims 2 to 5, characterised in that the external profile of the sealing lip (9), in contact with the thrust ring (2), is partially curved along a certain radius (26).

7. A sealing fitting according to Claim 6, characterised in that the thrust ring (2a) is extended with a shape which partially follows the above mentioned radius (26') of the external profile of the sealing lip (9), preserving a clearance angle (27) equal to the pivot angle (28) of the lip (9) when operated.

8. A sealing fitting according to any one of Claims 1 to 7, characterised in that the main body (6) of the ring (1) is extended, at the end opposite the sealing lip (9), by a thinner wing (11) which ends in an annular groove (14) separating a wiper and scraper lip (15), facing the interior, and an immobilisation projection (16), facing the exterior and latching on the rod guide (4).

9. A sealing fitting according to any one of Claims 1 to 8, characterised in that it is divided into two parts, its ring being divided into two parts, one (1a) of which, comprising the sealing lip (9) associated with the thrust ring (2), has a sealing and guiding function and the other (1b) of which, provided with the above mentioned scraper and latching means (15, 16), has a guiding and latching function, the two parts in question (1a, 1b) being mounted in respective open channels (3a, 3b) and immobilised by additional latching means (34, 37 ; 38, 40).

10. A sealing fitting according to Claim 9, characterised in that the additional latching means comprise, for one of the parts (1a) of the ring, a hook device (34) provided at the end of the fitting opposite the sealing lip (9) and engaging in an annular slot (37) of the corresponding channel (3a), and, for the other part (1b) of the ring, a hook device (38) situated opposite the scraper lip (15) and introduced into the annular groove (40) of the corresponding channel (3b).

**Ansprüche**

1. Hydraulikdichtung für eine Druckrichtung, insbesondere zur Gewährleistung der dynamischen Abdichtung zwischen einer Stangenführung (4) und einer in dieser Führung gleitenden und/oder rotierenden Kolbenstange (23), die zwei Räume voneinander trennt, von denen der eine unter Druck steht und der andere mit der Atmosphäre in Verbindung steht, wobei sich die Dichtung als kompakte Verbindung eines Ringstückes (1) und eines Druckringes (2) die in einer offenen, durch nur eine Schulter (5) begrenzten Nut (3) der Stangenführung (4) angeordnet sind, wobei ein Ende des Ringstückes (1) eine Dichtlippe (9) bildet, die senkrecht zu dem Druckring (2) liegt und unter dessen Wirkung steht, dadurch gekennzeichnet, daß das dem Druck abgewandte Ende des Ringstückes (1), dessen Hauptkörper eine Führungsfunktion hat, mit Mitteln (11-16) versehen ist, die zugleich das Abstreichen der Kolbenstange (23) und ein die Dichtung in der Nut (3) festsetzendes Verrasten gewährleisten.

2. Dichtung nach Anspruch 1, dadurch gekennzeichnet, daß die Dichtlippe (9) mit dem Hauptkörper (6) des Ringstückes (1) mittels einer Filmscharnierzone (10) verbunden ist.

3. Dichtung nach Anspruch 2, dadurch gekennzeichnet, daß die Dichtlippe (9) am Ort des linearen Dichtkontaktes (19, 20) mit der Kolbenstange (23) einen dickeren Querschnitt hat.

4. Dichtung nach Anspruch 2 oder 3, dadurch gekennzeichnet, daß die die Dichtlippe (9) mit dem Hauptkörper (6) des Ringstückes (1) verbindende Filmscharnierzone (10) darauf ausgelegt ist, infolge der Deformation der Dichtlippe (9) eine Kraft (25) zu erzeugen, die den Hysteresisverlust des den Druckring (2) bildenden Materiales kompensiert.

5. Dichtung nach einem der Ansprüche 2-4, dadurch gekennzeichnet, daß das Innenprofil (22) der Dichtlippe (9) zwischen der Filmscharnierzone (10) und der Dichtkontaktkante (19) konkav ist.

6. Dichtung nach einem der Ansprüche 2-5, dadurch gekennzeichnet, daß das Außenprofil der Dichtlippe (9), das mit dem Druckring (2) in Kontakt steht, teilweise gemäß einem vorbestimmten Radius (26) gekrümmt ist.

7. Dichtung nach Anspruch 6, dadurch gekennzeichnet, daß der Druckring (2a) in einer Form verlängert ist, die teilweise dem genannten Radius (26) des Außenprofiles der Dichtlippe (9) folgt, unter Beibehalt eines Verjüngungswinkels (27), der gleich dem Schwenkwinkel (28) der Lippe (9) bei deren Ingangsetzung ist.

8. Dichtung nach einem der Ansprüche 1-7, dadurch gekennzeichnet, daß der Hauptkörper (6) des Ringstückes (1) an dem der Dichtlippe (9) gegenüberliegenden Ende durch einen Steg (11) geringerer Dicke verlängert ist, der in einer Ringnut (14) endet, die eine Reinigungs- und Abstreiflippe (15), die nach innen gewandt ist, und eine Festsetzstufe (16) voneinander trennt, die nach außen gewandt ist und sich auf der Stangenführung (4) verrastet.

9. Dichtung nach einem der Ansprüche 1-8, dadurch gekennzeichnet, daß sie in zwei Teile zerteilt ist, wobei ihr Ringstück in zwei Teile geteilt ist, deren einer (1a), der die dem Druckring (2) zugeordnete Dichtlippe (9) beinhaltet, eine Abdicht- und Führungsfunktion hat und deren anderer (1b), der mit den genannten Mitteln zum Abstreifen und Verrasten (15, 16) versehen ist, eine Führungs- und Abstreiffunktion hat, wobei die beiden genannten Teile (1a, 1b) in jeweils offenen Nuten (3a, 3b) montiert sind und durch zusätzliche Rastmittel (34, 37, 38, 40) festgesetzt sind.

10. Dichtung nach Anspruch 9, dadurch gekennzeichnet, daß die zusätzlichen Rastmittel für den einen Teil (1a) des Ringstückes ein Stufenstück (34) beinhalten, das an dem der Dichtlippe (9) gegenüberliegenden Ende vorgesehen ist und in eine Ringnut (37) der entsprechenden Aufnahmenut (3a) eindringt und für das andere Teil (1b) des Ringstückes ein Stufenstück (38) beinhaltet, das an dem der Abstreiflippe (15) gegenüberliegenden Ende liegt und in eine Ringnut (40) der aufnehmenden Nut (3b) eingeführt ist.

## FIG.1

0 070 946

# FIG.2

# FIG.3

# FIG.4

# FIG.5

# FIG.6